# EUROPÄISCHE PATENTANMELDUNG

(11) **EP 1 329 830 A2**
(43) Veröffentlichungstag der Anmeldung: **23.07.2003**
(21) Anmeldenummer: 02026322.4
(22) Anmeldetag: 21.11.2002
(51) Int. Cl.: G06F 17/60

(54) **Verfahren zum Erfassen und zur Auswertung von Daten**

(30) Priorität: 23.11.2001 AT 18412001
(71) Anmelder: GSV Immobilien Ges.m.b.H., 2285 Leopoldsdorf (AT)
(72) Erfinder: Legerer, Otto, 2380 Perchtoldsdorf (AT)
(74) Vertreter: Krause, Peter

(57) **Zusammenfassung**

Die Erfindung betrifft ein Verfahren, ein Datenverarbeitungsprogramm sowie eine Einrichtung zum Erfassen und zur Auswertung von Daten, beispielsweise zur systematischen Gewinnung, Analyse und Interpretation von in Datenform vorliegenden Informationen. Dabei werden nachstehende Verfahrensschritte durchgeführt:
Eingabe und Speicherung der für die Erfassung entsprechenden Parameter, beispielsweise die genaue Spezifikation der gewünschten Information, in einer vorgegebenen Datenverarbeitungsanlage,
drahtlose Übertragung, vorzugsweise über eine bidirektionale Übertragungsverbindung, der Daten von der Datenverarbeitungsanlage zu mindestens einer mobilen Datenkommunikationseinrichtung,
Eingabe der zu erfassenden Daten, beispielsweise von einzelnen Befragungsergebnissen, in die mobile Datenkommunikationseinrichtung,
gegebenenfalls Speicherung dieser einzelnen Daten zu Datensätzen in der Datenkommunikationseinrichtung,
drahtlose Übertragung, insbesondere über die bidirektionale Übertragungsverbindung, der Daten von der mobilen Datenkommunikationseinrichtung zu der vorgegebenen Datenverarbeitungsanlage,
Sammlung dieser Daten bzw. Datensätze in der Datenverarbeitungsanlage und
Auswertung dieser Daten bzw. Datensätze über eine in dieser Datenverarbeitungsanlage implementierte Software bzw. ein Datenverarbeitungsprogramm.

## Beschreibung

Die Erfindung betrifft ein Verfahren zum Erfassen und zur Auswertung von Daten, beispielsweise zur systematischen Gewinnung, Analyse und Interpretation von in Datenform vorliegenden Informationen sowie ein Datenverarbeitungsprogramm und eine Einrichtung zur Durchführung des Verfahrens.

Die Bedeutung der Kommunikationswissenschaften, insbesondere die der empirische Sozialforschung hat in letzter Zeit sehr stark zugenommen. Die empirische Sozialforschung versucht das Verhalten und Handeln von bestimmten Personen zu erfassen und ihre Haltung, Meinungen und Einstellungen zu ergründen. Diese"Datengewinnung" mit Hilfe von Kommunikationsprozessen ist die Basis jeder Markt-, Meinungs-, Sozialforschung bzw. Erhebung oder Umfrage.

Je nach Zielsetzung der Erhebung bedient man sich dabei unterschiedlicher Verfahren und Methoden. Diese Verfahren und Methoden haben aber trotzdem ein gemeinsames Schema: Für die Datengewinnung wird eine Zielgruppe definiert, die Generierung der Daten erfolgt nach einer festgelegten Vorgangsweise, die gewonnenen Daten werden gespeichert und ausgewertet und es werden daraus Schlussfolgerungen gezogen.

An der Definition der Marktforschung ist dieses gemeinsame Schema besonders gut zu erkennen. Unter Marktforschung versteht man die systematische und objektive Gewinnung, Analyse und Interpretation von Informationen bzw. Daten, die zur Erkennung und Lösung von Problemen eines bestimmten Marktes dienen.

Während die Auswahl der Zielgruppe noch relativ einfach erscheint und sehr oft eine reine Kostenfrage darstellt, ist die Festlegung der Befragungsart, wie z.B. mündlich, telefonisch, mittels Fragebogen, übers Internet usw. schon schwieriger und hängt sehr stark von der zahlenmäßigen Größe der Zielgruppe ab.

Bekannt sind z.B. Einzelbefragungen, bei denen einzelne Personen, vorwiegend mündlich befragt werden. Bekannt ist auch die Totalerhebung, bei der alle in Frage kommenden Personen kontaktiert und befragt werden. Bekannt sind vor allem die Repräsentativerhebungen, in denen nur eine bestimmte Anzahl der in Frage kommenden Personen befragt werden, so genannte Stichproben.

Da die Auswahl der Stichproben, das heißt die Festlegung welche der möglichen Personen dann tatsächlich befragt werden, das Ergebnis der Befragung beeinflussen kann, sind dafür eigene Auswahlverfahren entwickelt worden wie beispielsweise Zufallsgenerator, Randomisierung, Quotarverfahren usw.

Unabhängig von der Art der Befragung sind die wichtigsten Arbeitsschritte bis zur Interpretation der Ergebnisse bekannterweise: Ausarbeitung eines Fragebogens, Katalog genannt, Festlegung der Auswerteschritte, Befragung und sammeln der Daten, auswerten und verdichten der Daten, erstellen visueller Hilfsmittel wie Tabellen und Diagramme, kritische Analyse auf Plausibilität bzw. Fehlerquellen, herausarbeiten der Kernaussagen, ableiten der Folgerungen usw.

Bekannt für die Art der Datengenerierung sind z.B. mündliche Befragungen (face to face). Die Vorteile dieser Befragungsart sind vor allem der persönliche Kontakt und die Möglichkeit der zusätzlichen Beobachtung des Befragten, die Verwendung von Interviewvorlagen sowie ganz allgemein die Kontrolle und damit Steuerung des gesamten Interviewablaufes. Die wichtigsten Nachteile sind neben den hohen Kosten vor allem die bewusste oder auch unbewusste Beeinflussungsmöglichkeit der Aussagen des Befragten, der erforderliche Zeitaufwand, beispielsweise unproduktive Reisezeit und dass bestimmte Bevölkerungsgruppen unter Umständen schwer erreichbar sind.

Bekannt ist weiters die schriftliche Art der Datengenerierung. Bei der schriftlichen Befragung ist der Interviewereinfluss ausgeschaltet und es ist ein großer Personenkreis erreichbar. Zusätzlich werden die räumlichen Entfernungen unwichtig und die Befragung kann mehr oder weniger gleichzeitig durchgeführt werden, so dass Zeit und Kosten einsparbar sind. Die Nachteile dieser Art der Befragung sind ziemlich schwerwiegend. Erstens ist die Rücklaufquote meistens niedrig und fast nicht beeinflussbar. Zweitens sind kaum Vorlagen verwendbar und es ist keine zusätzliche Verhaltensbeobachtung möglich. Außerdem ist die Anzahl der vorgelegten Fragen limitiert und die Gefahr gegeben, das der Befragte bei nicht eindeutig und präzise formulierten Fragestellungen etwas anderes assoziiert, als geplant.

Bekannt sind auch telefonische Befragungen. Bei der telefonischen Befragung ist eine Interviewsteuerung möglich, so dass Missverständnisse ausgeräumt werden können und sie ist relativ rasch durchführbar und auch nicht kostenintensiv. Als Nachteile müssen die beschränkte Interviewdauer angegeben werden und dass Vorlagen schwer verwendbar sind. Nachteilig ist auch, dass eine Verhaltensbeobachtung nicht möglich ist und man nicht abschätzen kann, ob der Telefonanruf gelegen kommt oder nicht. Dieser Störfaktor kann ein ungewöhnliches Verhalten provozieren.

In letzter Zeit sind auch computerunter- oder -gestützte Befragungen entwickelt und zunehmend häufiger eingesetzt worden. Art und Umfang der Computerunterstützung richtet sich dabei nach der Durchführung der Befragung und reicht von CAPI (Computer Assistant Personnel Interview) über CATI (Computer Assistant Telefon Interview) bis zu online Befragungen über Internet oder "Tele-Tests" mit Rückkanaltechnik. Nachteilig bei dieser Befragung sind die hohen Investitionskosten, beispielsweise für einen Laptop. Außerdem kommen noch die spezifischen Nachteile der jeweiligen Interviewart dazu, das heißt bei CAPI die Nachteile der mündlichen Befragung und bei CATI die Nachteile der telefonischen Erhebung.

Aufgabe der Erfindung ist es, ein Verfahren der eingangs genannten Art zu schaffen, das die oben angeführten Nachteile vermeidet und das eine rationelle objektive Datengenerierung gewährleistet.

Die Aufgabe wird durch die Erfindung gelöst.

Das erfindungsgemäße Verfahren ist gekennzeichnet durch die Schritte:
Eingabe und Speicherung der für die Erfassung entsprechenden Parameter, beispielsweise die genaue Spezifikation der gewünschten Information, in einer vorgegebenen Datenverarbeitungsanlage,
Übertragung, vorzugsweise über eine drahtlose, bidirektionale Übertragungsverbindung, der Daten von der Datenverarbeitungsanlage zu mindestens einer mobilen Datenkommunikationseinrichtung,
Eingabe der zu erfassenden Daten, beispielsweise von einzelnen Befragungsergebnissen, in die mobile Datenkommunikationseinrichtung,
gegebenenfalls Speicherung dieser einzelnen Daten zu Datensätzen in der Datenkommunikationseinrichtung,
Übertragung, insbesondere über die drahtlose, bidirektionale Übertragungsverbindung, der Daten von der mobilen Datenkommunikationseinrichtung zu der vorgegebenen Datenverarbeitungsanlage,
Sammlung dieser Daten bzw. Datensätze in der Datenverarbeitungsanlage und
Auswertung dieser Daten bzw. Datensätze über eine in dieser Datenverarbeitungsanlage implementierte Software bzw. ein Datenverarbeitungsprogramm.

Mit dem erfindungsgemäßen Verfahren ist es erstmals möglich, in Hinblick auf das Datenschutzgesetz die Anonymität des Probanden zu wahren. Ferner ist der Vorteil gegeben, dass eine wirtschaftliche Erfassung von großen Datenmengen möglich ist. Die Wirtschaftlichkeit schlägt sich vor allem in Zeitund Kostenersparnis nieder. Darüber hinaus sind die Vorteile der Computerunterstützung in der direkten Dateneingabe gleichzeitig mit der Befragung und der laufenden Auswertemöglichkeit, so dass auch vorzeitig abgebrochen werden kann, zu sehen.

Gemäß einem besonderen Merkmal der Erfindung erfolgen mehrere Datenerfassungen parallel und werden übertragen. Dadurch wird die Wirtschaftlichkeit des erfindungsgemäßen Verfahrens noch optimiert.

Nach einer Ausgestaltung der Erfindung wird die Übertragung der Daten von der Datenkommunkationseinrichtung zur Datenverarbeitungsanlage in Echtzeit durchgeführt. Dadurch wird eine hohe Geschwindigkeit der Datengenerierung erreicht.

Gemäß einer alternativen Ausgestaltung der Erfindung wird die Übertragung der Daten von der Datenkommunkationseinrichtung zur Datenverarbeitungsanlage zeitversetzt durchgeführt. Es kann damit eine hohe Flexibilität der Datenerfassung erzielt werden.

Nach einer weiteren Ausgestaltung der Erfindung wird die Übertragung der Daten drahtlos, beispielsweise über GPRS, UMTS, GSM, Funk, Infrarot, Bluetooth, Wireless-LAN o. dgl. durchgeführt. Es können also die vom Befragten direkt über das Display der transportablen Datenkommunikationseinrichtung eingegebenen Daten über eine drahtlose bidirektionale Datenübertragung z.B. GPRS, GSM, Funk, UMTS, Infrarot, Bluetooth, Wireless-LAN o. dgl. an eine Datenverarbeitungsanlage übertragen werden. Von großem Vorteil ist es dabei, vollkommen unabhängig von Datenübertragungsnetzen zu sein und damit problemlos auch nicht so ohne weiteres zugängliche Bevölkerungsgruppen befragen zu können.

Gemäß einer weiteren alternativen Ausgestaltung der Erfindung wird die Übertragung der Daten über LAN-Netzwerke oder Standleitungen oder Rückkanaltechnik oder Internet o. dgl. durchgeführt. Entsprechend der vorgegebenen Infrastruktur können diese Möglichkeiten ebenso zu einer wirtschaftlichen Verfahrensweise genützt werden. Von Vorteil ist es dabei weiters, dass beliebig viele Antworten zu gleicher Zeit praktisch in Echtzeit übertragen werden können.

Die erfindungsgemäße Aufgabe wird aber weiters durch ein Datenverarbeitungsprogramm gelöst, dass dadurch gekennzeichnet ist, dass dieses Datenverarbeitungsprogramm aus mindestens zwei Teilprogrammen besteht, wobei ein Teilprogramm als Betriebssystem für die Datenverarbeitungsanlage und der Datenkommunkationseinrichtung im Online-Betrieb und das andere Teilprogramm als Betriebssystem für die Datenverarbeitungsanlage im Offline- Betrieb dient. Dadurch kann einerseits eine angenehme Bearbeitung durch Interaktivität, also einem Spaß-Faktor, erreicht werden und anderseits ist eine äußerst hohe Effizienz durch den einfachen Erstellungsprozess gegeben. Zufriedene Teilnehmer und hohe Teilnahmequoten sichern eine optimale Kundenzufriedenheit.

Nach einer weiteren Ausgestaltung der Erfindung ist zwischen den Online und den Offline Applikationen (Web Interface) eine Schnittstelle vorgesehen, die per Browser die erfassten Daten auf die Datenverarbeitungsanlage überträgt und aktiviert. Über diese Schnittstelle können die aktiven Datenerfassungen in der Datenverarbeitungsanlage verwaltet und kontrolliert werden. Neben der Echtzeitstatistik können auch Teilnehmerzahlen- und -quoten sowie die Abbrecherraten in verschiedenen Darstellungsformen, beispielsweise in Diagrammen, in Tagesstatistiken oder in einer Gesamtauswertung angeboten werden.

Gemäß einem weiteren Merkmal der Erfindung wird auf der Grundlage der vorherigen Offline Programmierung jede Frageseite für den Probanden dynamisch neu generiert. Dadurch kann die Interaktion, wie Filterführung, Randomisierung, etc. gewährleistet werden. Diese Software determiniert grundsätzlich die Möglichkeiten der Umfrageerstellung. Es wurde auch der Anspruch verwirklicht, alle Möglichkeiten der Server-Software bereits im Offline-Tool abzubilden, das heißt, bequem per Mausklick programmierbar zu gestalten.

Nach einer Weiterbildung der Erfindung erfolgt die Ausführung der Administration durch ein reines Web-Interface, das auf HTML oder JavaScript basiert. Hierdurch werden eventuell sicherheitsrelevante Aspekte, wie der Zugang per Telnet oder FTP komplett vermieden. Dies wird dadurch erreicht, dass diese Software alle Anwendungsaktionen auf einer Browser-Oberfläche mit Links begrenzt, deren Betätigung dann in definierte Befehle an das Betriebssystem umgesetzt werden.

Gemäß einer weiteren Ausgestaltung ist eine mindestens dreistufige Hierarchie vorgesehen und die Bedienung erfolgt in drei Ebenen. Durch die integrierte Userverwaltung wird weiteren potentiellen Sicherheitslücken entgegengewirkt, die durch das Anlegen von systemweiten Anwendern entstehen könnten. So kommt dieses Programm ohne jede Wartung durch den Systemadministrator aus. Sinn dieser drei Ebenen ist ferner, dass der Systemadministrator die Umfrageveranstalter nur einmal einrichten muss, und diese anschließend selbständig ihre Umfrageverzeichnisse erzeugen können.

Nach einer besonderen Weiterbildung ist eine Verschlüsselung der Daten, insbesondere eine SSL-Verschlüsselung, vorgesehen. Diese Verschlüsselung kann optional eingerichtet werden. Dabei werden die durch das Internet oder Intranet transferierten Daten verschlüsselt und bei der Ankunft im Server wieder entschlüsselt.

Gemäß einer weiteren Ausgestaltung der Erfindung ist eine Verknüpfungs- und Auswertesoftware vorgesehen, mit der Dateien erzeugbar sind, in die bereits vorhandene Daten einspielbar sind. Dadurch können sehr komplexe Ergebnisse erzielt werden.

Nach einem besonderen Merkmal der Erfindung ist das Verfahren für eine standortunabhängige Umfrage bzw. Befragung auf dem Gebiet der Markt- und Meinungsforschung, gekennzeichnet durch die Schritte:
Eingabe und Speicherung der Daten des Fragekataloges in der Datenverarbeitungsanlage,
Abrufung des Fragenkataloges von der Datenverarbeitungsanlage über eine Übertragungsverbindung mit der mobilen Datenkommunikationseinrichtung
Eingabe der Befragungsergebnisse in eine mobile Datenkommunikationseinrichtung,
gegebenenfalls Speicherung der einzelnen Befragungsergebnisse zu Ergebnispaketen
Übertragung der Daten von der mobilen Datenkommunikationseinrichtung zu der vorgegebenen Datenverarbeitungsanlage,
Sammlung dieser Befragungsergebnisse in der Datenverarbeitungsanlage und
Auswertung dieser Befragungsergebnisse über eine in dieser Datenverarbeitungsanlage implementierte Software bzw. ein Datenverarbeitungsprogramm.

In der Datenverarbeitungsanlage ist eine Software implementiert, die die übertragenen und gespeicherten Daten unmittelbar auswertet und die jeweiligen Ergebnisse über visuelle Hilfsmittel wie z.B. Diagramme darstellt. Dadurch ergibt sich der immense Vorteil der Erfindung, dass jederzeit die jeweils aktuellen Zwischenergebnisse der Befragung vorliegen, zum Teil schon während die Befragung noch läuft. Es sind dadurch keine komplizierten Hochrechnungen mehr erforderlich, um die Trends der Erhebung zu erkennen erforderlich.

Es sind mit diesem erfindungsgemäßen Verfahren beliebige Filterführungen sowie Item- und Fragenrandomisierung möglich. Ferner ist auch eine Mehrsprachigkeit des Fragenkataloges kein Problem. Ebenso ist dieses Programm voll multimediafähig, beispielsweise können 3D-Objekte erstellt werden. Auch jede Quotierung und Antwortverknüpfung ist denkbar. Darüber hinaus sind eine Statusanzeige und die freie Wahl von Hilfstexten möglich.

Abschließend wird die Aufgabe der Erfindung auch durch eine erfindungsgemäße Einrichtung gelöst, die dadurch gekennzeichnet ist, dass mindestens eine Datenverarbeitungsanlage vorgesehen ist, wobei diese Datenverarbeitungsanlage über eine, vorzugsweise drahtlose, bidirektionale, Übertragungsverbindung mit mindestens einer mobilen Datenkommunikationseinrichtung verbunden ist. Mit dieser erfindungsgemäßen Einrichtung ist eine sichere Datenerfassung ohne Übertragungsfehler gewährleistet. Dadurch ist eine hohe Zuverlässigkeit garantiert. Ferner ist ein übersichtliches User Interface gegeben und eine einfachste, selbsterklärende Bedienung der Hardware-Komponenten möglich.

Gemäß einem besonderen Merkmal der Erfindung ist die mobile Datenkommunikationseinrichtung multi-mediafähig. Dadurch können auch unter anderem 3D-Objekte erstellt werden.

Natürlich können mit der oben aufgezeigten Erfindung alle Grundformen der Datenerhebung abgedeckt werden. So ist eine so genannte Head Research, eine Primärforschung bzw. Field research und auch eine interne oder externe Sekundärforschung bzw. Desk Research möglich. Auch die Methoden der Forschungspraxis, wie beispielsweise Repräsentativumfragen, Panel-Untersuchungen, Barometer Studien, Tiefeninterviews, Gruppengespräche sind natürlich möglich.

Darüber hinaus sind alle angewandten Auswahlverfahren, wie beispielsweise Zufallsziffern, reine Zufallsauswahl, systematische Zufallsauswahl, geschichtete Stichprobenverfahren, wie proportionale und disproportionale Stichprobe, mehrstufige Auswahlverfahren, Klumpenstichproben, Flächenstichproben und Quotenstichproben mit der Erfindung durchführbar.

Auch Gewichtungen der Datenerhebung können mit dem erfindungsgemäßen Datenverarbeitungsprogramm gezielt erfolgen. Wie ja an sich bekannt, stellen Gewichtungen den Versuch dar, die Proportionalität der Elemente, die durch allfällige Ausfälle nicht ganz realisiert waren, wiederherzustellen. Sofern die Disproportionalität der Stichprobe zum Einsatz kam, wird dies durch Gewichtung wieder proportionalisiert.

Ebenso sind Markt- oder Meinungsumfragen mit Random-Route und Quota Verfahren durchaus durchführbar.

Damit ergeben sich mehrere große Vorteile der Erfindung:

Das Markieren von dafür vorgesehenen Feldern auf dem Display der Datenkommunikationseinrichtung durch den Befragten selbst, kann so erfolgen, dass der Interviewer nicht sieht welche Antwort gegeben wird. Der Interviewer kann daher weder unbewusst noch beabsichtigt die gegebenen Antworten beeinflussen. Es wird also erstmals möglich auch bei mündlichen Befragungen jegliche Beeinflussung des Befragten durch den Interviewer mit Sicherheit auszuschließen. Dadurch werden die Umfragen in Zukunft einiges an Aussagekraft gewinnen, weil den Befragten die Möglichkeit gegeben wird, unbefangen und unkontrolliert zu antworten und nicht aus welchen Gründen auch immer "Gefälligkeitsantworten" geben zu müssen.

Der nächste große Vorteil liegt in der Gestaltungsmöglichkeit von Umfragen ohne Interviewer. Bei Telefonbefragungen sind z.B. die Informationsmöglichkeiten zu den Fragen sehr beschränkt. Über das Display der erfindungsgemäßen Datenkommunikationseinrichtung können ausführliche Informationen wie z.B. schriftliche Erklärungen, Bilder, Tabellen und Diagramme zur Verfügung gestellt werden. Der Befragte kann sich daher sehr ausführlich informieren und Missverständnisse werden weitgehend ausgeschlossen. Es steigt auch bei dieser Art der Befragung die Aussagekraft der Umfrage, weil die Befragten bei für sie unverständlichen Fragen nicht irgendetwas ankreuzen müssen.

Ein weiterer Vorteil z.B. gegenüber telefonischen Befragungen liegt in der freien Wahl des Befragten, wann er die Fragen beantworten will. Man weiß beispielsweise bei telefonischen Befragungen nie, in welchen Gemütszustand der zu Befragende erreicht wird. Ist er mit seinen Gedanken schon ganz wo anders und will die Befragung möglichst schnell hinter sich bringen, wird er es mit der Richtigkeit seiner Antworten nicht so genau nehmen. Hat der Befragte aber eine Datenkommunikationseinrichtung entsprechend der Erfindung kann er die Fragen markieren wann er will.

Ein weiterer großer Vorteil der Erfindung ist der Wegfall von Eingabefehlern. Derzeit muss bei allen Befragungen pro Befragtem ein Protokoll erstellt werden. Am Ende der Erhebung müssen die im Protokoll festgehaltenen Antworten in eine Datenverarbeitungsanlage eingegeben werden. Das monotone Eingeben von anonymen Daten fördert Eingabefehler. Das Markieren der Antworten auf dem Display der Datenkommunikationseinrichtung durch den Befragten selbst, ist die erfindungsgemäße Dateneingabe und braucht daher nicht nachträglich von Hand zu erfolgen, so dass auch keine Eingabefehler entstehen können.

Ein weiterer Vorteil der Erfindung ist die große Zeiteinsparung und damit eine Kostensenkung. Wie schon aufgezeigt müssen derzeit die in den Protokollen festgehaltenen Antworten nachträglich händisch in eine Datenverarbeitungsanlage eingegeben werden. Bei einigen hundert befragten Personen ist das eine zeitaufwändige und teure Arbeit, weil das nachträgliche Eingeben der Daten in die Datenverarbeitungsanlage entfällt. Das Markieren der Antworten auf dem Display der Datenkommunikationseinrichtung durch den Befragten selbst, ist die erfindungsgemäße Dateneingabe und braucht daher nicht nachträglich von Hand zu erfolgen, so dass eine entsprechende Wirtschaftlichkeit erreicht wird.

## Patentansprüche

1. Verfahren zum Erfassen und zur Auswertung von Daten, beispielsweise zur systematischen Gewinnung, Analyse und Interpretation von in Datenform vorliegenden Informationen, **dadurch gekennzeichnet, dass** nachstehende Verfahrensschritte durchgeführt werden:
Eingabe und Speicherung der für die Erfassung entsprechenden Parameter, beispielsweise die genaue Spezifikation der gewünschten Information, in einer vorgegebenen Datenverarbeitungsanlage,
Übertragung, vorzugsweise über eine drahtlose, bidirektionale Übertragungsverbindung, der Daten von der Datenverarbeitungsanlage zu mindestens einer mobilen Datenkommunikationseinrichtung,
Eingabe der zu erfassenden Daten, beispielsweise von einzelnen Befragungsergebnissen, in die mobile Datenkommunikationseinrichtung,
gegebenenfalls Speicherung dieser einzelnen Daten zu Datensätzen in der Datenkommunikationseinrichtung,
Übertragung, insbesondere über die drahtlose, bidirektionale Übertragungsverbindung, der Daten von der mobilen Datenkommunikationseinrichtung zu der vorgegebenen Datenverarbeitungsanlage,
Sammlung dieser Daten bzw. Datensätze in der Datenverarbeitungsanlage und
Auswertung dieser Daten bzw. Datensätze über eine in dieser Datenverarbeitungsanlage implementierte Software bzw. ein Datenverarbeitungsprogramm.

2. Verfahren nach Anspruch 1, **dadurch gekennzeichnet, dass** mehrere Befragungen parallel erfolgen und übertragen werden.

3. Verfahren nach Anspruch 1 oder 2, **dadurch gekennzeichnet, dass** die Übertragung der Daten von der Datenkommunkationseinrichtung zur Datenverarbeitungsanlage in Echtzeit durchgeführt wird.

4. Verfahren nach Anspruch 1 oder 2, **dadurch gekennzeichnet, dass** die Übertragung der Daten von der Datenkommunkationseinrichtung zur Datenverarbeitungsanlage zeitversetzt durchgeführt wird.

5. Verfahren nach mindestens einem der Ansprüche 1 bis 4, **dadurch gekennzeichnet, dass** die Übertragung der Daten drahtlos beispielsweise über GPRS, UMTS, GSM, Funk, Infrarot, Bluetooth, Wireless-LAN o. dgl. durchgeführt wird.

6. Verfahren nach mindestens einem der Ansprüche 1 bis 4, **dadurch gekennzeichnet, dass** die Übertragung der Daten über LAN-Netzwerke oder Standleitungen oder Rückkanaltechnik oder Internet o. dgl. durchgeführt wird.

7. Datenverarbeitungsprogramm zur Durchführung des Verfahrens nach mindestens einem der Ansprüche 1 bis 6, **dadurch gekennzeichnet, dass** dieses Datenverarbeitungsprogramm aus mindestens zwei Teilprogrammen besteht, wobei ein Teilprogramm als Betriebssystem für die Datenverarbeitungsanlage und der Datenkommunkationseinrichtung im Online-Betrieb und das andere Teilprogramm als Betriebssystem für die Datenverarbeitungsanlage im Offline- Betrieb dient.

8. Datenverarbeitungsprogramm nach Anspruch 7, **dadurch gekennzeichnet, dass** zwischen den Online und den Offline Applikationen (Web Interface) eine Schnittstelle vorgesehen ist, die per Browser die erfassten Daten auf die Datenverarbeitungsanlage überträgt und aktiviert.

9. Datenverarbeitungsprogramm nach Anspruch 7 oder 8, **dadurch gekennzeichnet, dass** auf der Grundlage der vorherigen Offline Programmierung jede Frageseite für den Probanden dynamisch neu generiert wird.

10. Datenverarbeitungsprogramm nach mindestens einem der Ansprüche 7 bis 9, **dadurch gekennzeichnet, dass** die Ausführung der Administration durch ein reines Web-Interface, das auf HTML oder JavaScript basiert, erfolgt.

11. Datenverarbeitungsprogramm nach mindestens einem der Ansprüche 7 bis 10, **dadurch gekennzeichnet, dass** eine mindestens dreistufige Hierarchie vorgesehen ist und die Bedienung in drei Ebenen erfolgt.

12. Datenverarbeitungsprogramm nach mindestens einem der Ansprüche 7 bis 11, **dadurch gekennzeichnet, dass** eine Verschlüsselung der Daten, insbesondere eine SSL-Verschlüsselung, vorgesehen ist.

13. Datenverarbeitungsprogramm nach mindestens einem der Ansprüche 7 bis 12, **dadurch gekennzeichnet, dass** eine Verknüpfungs- und Auswertesoftware vorgesehen ist, mit der Dateien erzeugbar sind, in die bereits vorhandene Daten einspielbar sind.

14. Verfahren nach mindestens einem der Ansprüche 1 bis 13 für eine standortunabhängige Umfrage bzw. Befragung auf dem Gebiet der Markt- und Meinungsforschung, **gekennzeichnet durch** die Schritte:
Eingabe und Speicherung der Daten des Fragekataloges in der Datenverarbeitungsanlage,
Abrufung des Fragenkataloges von der Datenverarbeitungsanlage über eine Übertragungsverbindung mit der mobilen Datenkommunikationseinrichtung
Eingabe der Befragungsergebnisse in eine mobile Datenkommunikationseinrichtung,
gegebenenfalls Speicherung der einzelnen Befragungsergebnisse zu Ergebnispaketen
Übertragung der Daten von der mobilen Datenkommunikationseinrichtung zu der vorgegebenen Datenverarbeitungsanlage,
Sammlung dieser Befragungsergebnisse in der Datenverarbeitungsanlage und
Auswertung dieser Befragungsergebnisse über eine in dieser Datenverarbeitungsanlage implementierte Software bzw. ein Datenverarbeitungsprogramm.

15. Einrichtung zur Durchführung des Verfahrens nach mindestens einem der Ansprüche1 bis 14, **dadurch gekennzeichnet, dass** mindestens eine Datenverarbeitungsanlage vorgesehen ist, wobei diese Datenverarbeitungsanlage über eine, vorzugsweise drahtlose, bidirektionale, Übertragungsverbindung mit mindestens einer mobilen Datenkommunikationseinrichtung verbunden ist.

16. Einrichtung nach Anspruch 15, **dadurch gekennzeichnet, dass** die mobile Datenkommunikationseinrichtung multi-mediafähig ist.
